Europäisches Patentamt

European Patent Office

Office européen des brevets

Publication number: **0 272 477**

**A1**

# EUROPEAN PATENT APPLICATION

(21) Application number: 87117311.8

(51) Int. Cl.$^4$: **C01F 7/52**

(22) Date of filing: 24.11.87

(30) Priority: 25.11.86 IT 2243986

(43) Date of publication of application:
**29.06.88 Bulletin 88/26**

(84) Designated Contracting States:
**DE ES FR**

(71) Applicant: **Arezia S.r.l.**
**31, Foro Buonarparte**
**Milan(IT)**

(72) Inventor: **Dubini, Mario**
**7, via Pansa**
**I-28100 Novara(IT)**
Inventor: **Ancona, Adolfo**
**10, Largo Cavalieri di Malta**
**Milano(IT)**
Inventor: **Galeazzi, Lucio**
**15, via Domodossola Borsano**
**Busto Arsizio (VA)(IT)**

(74) Representative: **Barz, Peter, Dr. et al**
**Patentanwälte Dipl.-Ing. G. Dannenberg Dr.**
**P. Weinhold, Dr. D. Gudel Dipl.-Ing. S.**
**Schubert, Dr. P. Barz Siegfriedstrasse 8**
**D-8000 München 40(DE)**

(54) **Aqueous solutions of basic aluminum salts, process for their preparation and their use.**

(57) The present invention relates to aqueous solutions of basic aluminum salts, containing an amount of $Al_2O_3$ comprised within the range of from 14 to 18% by weight. The basic aluminum salts correspond to the formula:

$$AlCl_x(SO_4)_yF_z(OH)_{(3-x-2y-z)}$$

wherein $\underline{x}$ is comprised within the range of from 1.65 to 2.07, $\underline{y}$ is comprised within the range of from 0 to 0.06 and $\underline{z}$ is comprised within the range of from 0.0002 to 0.1.

These solutions are prepared by reacting Al$(OH)_3$ with HF, NaF or KF, and one or more reactants selected from:

    a) HCl, or

    b) HCl and $H_2SO_4$, or

    c) $AlCl_3$, or

    d) $AlCl_3$ and $Al_2(SO_4)_3$.

EP 0 272 477 A1

## AQUEOUS SOLUTIONS OF BASIC ALUMINUM SALTS, PROCESS FOR THEIR PREPARATION AND THEIR USE

The present invention relates to basic aluminum salts, and to a process for preparing them. More precisely, it is concerned with aqueous solutions of fluorine-containing basic aluminum chloride or chlorosulphate.

It is known that aqueous solutions of basic aluminum chloride or chlorosulphate can be prepared by reacting, in the presence of water, aluminum hydroxide with HCl and optionally $H_2SO_4$ or by reacting, in the presence of water, aluminum hydroxide with aluminum chloride and optionally aluminum sulphate.

The reaction is carried out at a high temperature, in an autoclave, under pressure; $Al(OH)_3$ is used in excess relative to the acidic or saline reactants.

The drawback of these processes is that at the end of the reaction, considerable amounts of unreacted $Al(OH)_3$ must be separated from the obtained solution, and must be recycled to a subsequent operation ; this causes an increase in technical complexity, and in costs.

The present Applicant has found now that the presence of small amounts of fluoride ions in the solution used to chemically react $Al(OH)_3$ improves the yield of reaction of this latter, and, consequently, decreases the amount of unreacted Al-$(OH)_3$ at the end of the reaction.

A purpose of the present invention is to supply new solutions of basic aluminum chloride or chlorosulphate, characterized by the presence of fluorine.

Another purpose is to provide a process to prepare basic aluminum chloride or chlorosulphate, which reduces the amount of unreacted $Al(CH)_3$ at the end of the reaction.

These and still further purposes are achieved by aqueous solutions of basic aluminum salts, which are one object of the present invention, containing an amount of $Al_2O_3$ comprised within the range of from 14 to 18% by weight, and are characterized in that the basic aluminum salts correspond to the formula:

$$AlCl_x(SO_4)_yF_z(OH)_{(3-x-2y-z)} \qquad (I)$$

wherein $x$ is comprised within the range of from 1.65 to 2.07, $y$ is comprised within the range of from 0 to 0.06 and $z$ is comprised within the range of from 0.0002 to 0.1.

In these new basic aluminum salts, the ratios between the various elements, expressed as equivalents, are as follows:

Cl/Al = 0.55 to 0.69
$SO_4$/Al = 0 to 0.04
OH/Al = 0.30 to 0.45

F/Cl = 0.0001 to 0.05

The above-said solution are stable to storage both at room temperature, and at relatively low temperatures (down to approximately -10°C), and at relatively high temperatures (up to approximately 30°C).

These solutions are used as flocculating agents in water clarification treatments, and as sizing coadjuvants, and retentive agents in paper production process.

Another object of the present invention is a process for preparing the above-said aqeuous solutions of basic aluminum salts which is characterized in that aluminum hydroxide is reacted with HF, NaF or KF, and one or two reactants selected from:

a) HCl, or
b) HCl and $H_2SO_4$, or
c) $AlCl_3$, or
d) $AlCl_3$ and $Al_2(SO_4)_3$.

The temperature is comprised within the range of from 140 to 160°C, and the reaction time is comprised within the range of from approximately 2 hours to approximately 6 hours if the reactants contain either $H_2SO_4$ or $Al_2(SO_4)_3$. whilst, if they do not contain them, the temperature is comprised within the range of from 140 to 180°C, and the reaction time is comprised within the range of from approximately 1 hour to approximately 6 hours.

The following ratios between the reactants, expressed as equivalents, are used:

$(Cl+SO_4)/Al_2O_3$ = 0.40 to 0,70
$SO_4$/Cl = 0 to 0.073
F/Cl = 0.0001 to 0.05

The water content of the reaction medium is selected in such a way that the $Al_2O_3$/(reaction mass) weight ratio is comprised within the range of from 0.16 to 0.24. At the end of the reaction, the solution is separated from any unreacted aluminum hydroxide.

In the above specified ratios, as $Al_2O_3$ both Al-$(OH)_3$, and $AlCl_3$ and $Al_2(SO_4)_3$ possibly used as reactants are computed.

Any unreacted $Al(OH)_3$ is usually recycled to a subsequent operation.

The present Applicant found, according to the invention, that the presence of fluorine ions in the reaction medium improves the reaction yield as referred to $Al(OH)_3$, so that, at reaction end, the amount of unreacted $Al(OH)_3$ is smaller.

This effect of fluorine ions is stronger when the ratios between the reactants, expressed as equivalents, are the following:

$(Cl+SO_4)/Al_2O_3$ = 0.40 to 0,70
$SO_4$/Cl = 0 to 0.073

F Cl = 0.01 to 0.05

In the products obtained by using the above shown ratios between the reactants, the coefficients of formula $AlCl_x(SO_4)_yF_z(OH)_{(3-x-2y-z)}$ (I) take the following values: $x$ is comprised within the range of from 1.68 to 2.07; $y$ is comprised within the range of from 0 to 0.06; and $z$ is comprised within the range of from 0.005 to 0.1.

The corresponding ratios, expressed as equivalents, are the following:

Cl/Al = 0.56 to 0.69

SO$_4$/Al = 0 to 0.04

OH/Al = 0.31 to 0.40

F/Cl = 0.001 to 0.005

The reaction is commonly run under its autogenous pressure, inside an autoclave.

The concentrations of the acidic and saline starting solutions is selected in such a way as to have in the reaction medium the $Al_2O_3$/(reaction mass) weight ratio as previously stated.

The reaction time is shorter when the reaction is run at higher temperatures, and longer when lower reaction temperatures are used. In any case, the reaction time is selected so as to obtain a solution, whose composition falls within the indicated ranges of values.

The solutions of basic aluminum salt according to the present invention are suitable for use as flocculating agents in water clarification treatment. The amount of solution, computed as $Al_2O_3$, to be used for water treatment, is generally comprised within the range of from 1 to 50 ppm in case of turbid waters, and of from 1 to 1000 ppm in case of waste waters.

The solutions of basic aluminum salt of the present invention are also suitable for use as sizing coadjuvants and retentive agents in paper production process.

The following Examples are supplied for the purpose of illustrating the present invention, without limiting it.

## EXAMPLE 1

A steel autoclave of 300 ml of capacity is used.

The autoclave is provided with an inner lining of polytetrafluoroethylene, and is equipped with a magnetic stirrer.

It is externally heated by means of an oil bath.

To it, 151.8 g of HCl at 32% by weight; 63 g of $Al(OH)_3$ at 57.14% of $Al_2O_3$ and 2.8 g of NaF are charged.

After sealing the autoclave, and starting up the stirrer, the autoclave is heated for 3 hours at 160°C.

The obtained reaction mixture contains 5.3 g of an insoluble residue, essentially constituted by un-

altered $Al(OH)_3$ and by a little quantity of $AlF_3$, and 212.3 g of a solution having the following composition (weight/weight):

$Al_2O_3$ = 15.34%

Total Cl = 22.25%, wherein 21.13% of chlorine is bonded to Al, the balance being attributable to NaCl

F = 0.5%

Na = not determined.

The following ratios, expressed as equivalents, result:

Cl/Al = 0.660; OH/Al = 0.311; F/Cl = 0.044

To the product, the following formula is attributed:

$AlCl_{1.980}F_{0.087}(OH)_{0.933}$

The yield, computed relatively to $Al_2O_3$ , is 90.47%.

## EXAMPLE 2

The reaction is carried out as in Example 1, but without using NaF.

A residue of 6.42 g, and a yield of 88.42%, computed relatively to $Al_2O_3$, are obtained.

It results therefore that the use of F ions causes an improvement of 2.05 % in yield.

## EXAMPLE 3

To the same autoclave as of Example 1, 187.83 g of $AlCl_3$ solution containing 11.5% of $Al_2O_3$; 25.2 g of $Al(OH)_3$ containing 57.14% of $Al_2O_3$, and 2.24 g of NaF are charged.

The autoclave is heated 6 hours at 160°C.

3.40 g of insoluble residue, and 211.87 g of solution are obtained. The solution contains (weight/weight):

$Al_2O_3$ = 15.96%; total Cl = 21.29%; Cl bonded to Al = 20.40%; F = 0.25%.

The following ratios, expressed as equivalents, result:

Cl/Al = 0.612; OH/Al = 0.374; F/Cl = 0.023

To the product, the following formula is attributed:

$AlCl_{1.836}F_{0.042}(OH)_{1.122}$

The yield, computed relatively to $Al_2O_3$, is 93.94%.

## EXAMPLE 4

The reaction is carried out as in Example 3, but without using NaF.

A residue of 3.96 g is obtained. The yield, computed relatively to $Al_2O_3$, is 92.9%

It results therefore that the use of F ions causes an improvement of 1.04 % in yield.

## EXAMPLE 5

To the same autoclave as of Example 1, 146 g of HCl at 32%; 1.92 g of $H_2SO_4$ at 98%; 2.71 g of NaF and 63 g of $Al(OH)_3$ containing 57.14% of $Al_2O_3$ are charged.

The autoclave is heated 3 hours at 160°C.

5.36 g of insoluble residue, and 209.25 g of solution are obtained. The solution contains (weight/weight):
$Al_2O_3$ = 15.56%; total Cl = 21.72%; Cl bonded to Al = 20.62%; $SO_4$ = 0.88%; F = 0.45%.

The following ratios, expressed as equivalents, result:
Cl/Al = 0.635; $SO_4$/Al = 0.02; F/Cl = 0.041; OH/Al = 0.319.

To the product the following formula is attributed:
$AlCl_{1.905}(SO_4)_{0.03}F_{0.078}$

The yield, computed relatively to $Al_2O_3$, is 90.44%.

## EXAMPLE 6

The reaction is carried out exactly as in Example 5, but without using NaF. A residue of 6.25 g is obtained. The yield, computed relatively to $Al_2O_3$, is 88.8%. As compared to the preceding value, obtained by using fluorine ions, a 1.64% decrease in yield is obtained.

## EXAMPLE 7

To the same autoclave as of Example 1, 169.04 g of $AlCl_3$ solution containing 11.5% of $Al_2O_3$; 2.12 g of solid aluminum sulphate containing 17% of $Al_2O_3$; 0.51 g of NaF and 28.35 g of $Al(OH)_3$ containing 57.14% of $Al_2O_3$ are charged.

The autoclave is heated 4 hours at 150°C. 8.37 g of insoluble residue, and 191.65 g of solution are obtained. The solution contains (weight/weight):
$Al_2O_3$ = 15.97%; total Cl = 21.18%; Cl bonded to Al = 20.95%; $SO_4$ = 0.51%; F = 0.1%.

The following ratios, expressed as equivalents, result:
Cl/Al = 0.628; $SO_4$/Al = 0.011; F/Cl = 0.009;

OH/Al = 0.352.

To the product the following formula is attributed:
$AlCl_{1.884}(SO_4)_{0.0165}F_{0.017}$

The yield, computed relatively to $Al_2O_3$, is 85%.

## EXAMPLE 8

The reaction is carried out as in Example 7, but without using NaF. A yield of 84.1%, computed relatively to $Al_2O_3$, is obtained (residue 8.87 g).

The use of F ions causes an increase in yield of 0.9 %

**Claims**

1. Aqueous solutions of basic aluminum salts, containing an amount of $Al_2O_3$ comprised within the range of from 14 to 18% by weight, characterized in that the basic aluminum salts correspond to the formula:

$$AlCl_x(SO_4)_yF_z(OH)_{(3-x-2y-z)} \qquad (I)$$

wherein $\underline{x}$ is comprised within the range of from 1.65 to 2.07, $\underline{y}$ is comprised within the range of from 0 to 0.06 and $\underline{z}$ is comprised within the range of from 0.0002 to 0.1.

2. Process for preparing aqueous solutions of basic aluminum salts according to claim 1, characterized in that aluminum hydroxide is reacted with HF, NaF or KF, and one or two reactants selected from:

    a) HCl, or

    b) HCl and $H_2SO_4$, or

    c) $AlCl_3$

    d) $AlCl_3$ and $Al_2(SO_4)_3$,

the temperature is comprised within the range of from 140 to 160°C, and the reaction time is comprised within the range of from approximately 2 hours to approximately 6 hours, if the reactants contain either $H_2SO_4$ or $Al_2(SO_4)_3$, whilst, if they do not contain them, the temperature is comprised within the range of from 140 to 180°C, and the reaction time is comprised within the range of from approximately 1 hour to approximately 6 hours; the following ratios between the reactants, expressed as equivalents, are used:

    $(Cl + SO_4)/Al_2O_3$ = 0.40 to 0,70

    $SO_4/Cl$ = 0 to 0.073

    F/Cl = 0.0001 to 0.05;

the water content in the reaction medium is selected in such a way that the $Al_2O_3$/(reaction mass) weight ratio is comprised within the range of from 0.16 to 0.24; and at the end of the reaction, the solution is separated from any unreacted aluminum hydroxide.

3. Use of the aqueous solutions of basic aluminum salts according to claim 1 as flocculating agents in water clarification treatment.

4. Use of the aqueous solutions of basic aluminum salts according to claim 1 as sizing coadjuvants and retentive agents in paper production.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | FR-A-2 125 337 (KALI-CHEMIE AG) <br> * Claims * <br> --- | 1,2 | C 01 F 7/52 |
| Y | FR-A-1 510 807 (SOCIETA EDISON) <br> * Page 1, first column, last paragraph - second column, first paragraph; page 1, second column, paragraph 5; * <br> --- | 1,2 | |
| A | EP-A-0 181 847 (CARLSSON) <br> * Page 2, column 1, first paragraph * | 3,4 | |
| A | * Claims * <br> --- | 1,2 | |
| A | CHEMICAL ABSTRACTS, vol. 84, no. 20, 17th May 1976, page 333, abstract no. 140407x, Columbus, Ohio, US; & JP-A-74 122 497 (OSAKA SODA CO., LTD) 22-11-1974 <br> * Whole abstract * <br> ----- | 1-3 | |

| | |
|---|---|
| | TECHNICAL FIELDS SEARCHED (Int. Cl.4) |
| | C 01 F |

The present search report has been drawn up for all claims

| Place of search | Date of completion of the search | Examiner |
|---|---|---|
| THE HAGUE | 04-03-1988 | ZALM W.E. |

EPO FORM 1503 03.82 (P0401)